# DEMANDE DE BREVET EUROPEEN

(11) **EP 4 803 334 A1**
(43) Date de publication de la demande: **09.09.2026**
(21) Numéro de dépôt: 26157319.0
(22) Date de dépôt: 09.02.2026
(51) Int. Cl.: B60H 1/00, F25B 5/00, F25B 6/00, F25B 41/20

(54) **SYSTÈME DE POMPE À CHALEUR AVEC ÉCHANGEUR RÉVERSIBLE ET COMMUTATION SÉRIE/PARALLÈLE DUDIT ÉCHANGEUR RÉVERSIBLE PAR UN ACTIONNEUR QUATRE VOIES**

(30) Priorité: 04.03.2025 FR 2502154
(71) Demandeur: AMPERE s.a.s., 92100 Boulougne-Billancourt (FR)
(72) Inventeur: ROSE, Bruno, 78280 GUYANCOURT (FR)
(74) Mandataire: Renault Group

(57) **Abrégé**

L'invention concerne un système (1) de pompe à chaleur pour véhicule automobile, comprenant :
un compresseur (3),
un premier condenseur (4) disposé en aval du compresseur (3), et
une vanne (14) unique commutable entre :
- une première configuration (18) dans laquelle la vanne (14) permet une circulation de fluide diphasique dans le circuit (2) primaire en parallèle dans un premier ensemble (9) comprenant un échangeur, dit échangeur (10) réversible, disposé en aval d'un premier détendeur (11) du premier ensemble (9), et dans un deuxième ensemble (6) comprenant un deuxième évaporateur (7) disposé en aval d'un deuxième détendeur (8), et
- une deuxième configuration (15) de la vanne (14) dans laquelle la vanne (14) permet une circulation de fluide diphasique dans le circuit (2) primaire en série dans le premier ensemble (9) et dans le deuxième ensemble (6).

## Description

### [Domaine technique]

L'invention concerne un système de pompe à chaleur pour véhicule automobile - en particulier pour véhicule automobile électrique ou hybride- avec échangeur réversible comprenant un actionneur quatre voies de commutation série/parallèle de cet échangeur réversible. L'invention concerne aussi un véhicule automobile muni d'un tel système.

### [État de la technique antérieure]

Les véhicules électriques ou hybrides sont équipés d'un dispositif de contrôle thermique (ou « thermo-management ») permettant d'assurer l'ensemble des fonctions de chauffage et de refroidissement du véhicule. Ce dispositif fait dans la plupart des cas intervenir un système de pompe à chaleur dans lequel un fluide réfrigérant diphasique gaz/liquide est utilisé pour réaliser des transferts de chaleur entre différents sous-systèmes du véhicule qui peuvent avoir des températures de fonctionnement différentes et/ou des besoins de refroidissement ou de chauffage variables suivant les cas d'usage. De tels sous-systèmes du véhicule sont, par exemple, l'habitacle, la batterie, la chaine de traction, l'électronique de puissance, le milieu extérieur, notamment.

Le fluide réfrigérant diphasique le plus communément utilisé à ce jour est un composé fluoré de type HydroFluoro-oléfine (HFO), le 2,3,3,3-tétrafluoropropène et identifié sous le nom R1234yf. Le R1234yf est visé par la réglementation sur l'interdiction des PFAS (« *per- and polyfluoroalkyl substance »).* A titre d'alternative au R1234yf et aux PFAS, il est proposé d'utiliser le propane (R290).

Compte tenu de son inflammabilité, l'utilisation du R290 à titre de fluide réfrigérant diphasique requiert de concevoir un système spécifique de pompe à chaleur comprenant un circuit de R290 qui soit aussi simple et compact que possible de façon à s'étendre à distance de l'habitacle et de la batterie. Les systèmes de pompe à chaleur avec un circuit de R290, actuellement proposés comprennent un ou deux évaporateur(s) (ou « chiller(s) ») de production d'un fluide caloporteur (notamment d'une eau glycolée) froid(e) et d'un condenseur de production d'un fluide caloporteur (notamment d'une eau glycolée) chaud(e), les échanges thermiques avec les différents sous-systèmes étant assurés par des circuits secondaires de ces fluides caloporteurs chauds et froids, comprenant des commutations de modes et des mélangeurs de ces fluides caloporteurs chauds et froids. Cette architecture simplifie la conception et le pilotage du circuit de R290. En revanche, cette architecture complexifie le(s) système(s) de chauffage et de refroidissement des différents sous-systèmes par l'intégration d'un nombre important de pompes, de vannes de commutation, de vannes proportionnelles de régulation, de canalisations et autres, sur les circuits secondaires de fluides caloporteurs. Cette complexification et les nécessaires arbitrages qui en découlent conduisent à renoncer à des fonctions telles que par exemple, la récupération de pertes thermiques et/ou le chauffage de la batterie par le système de pompe à chaleur.

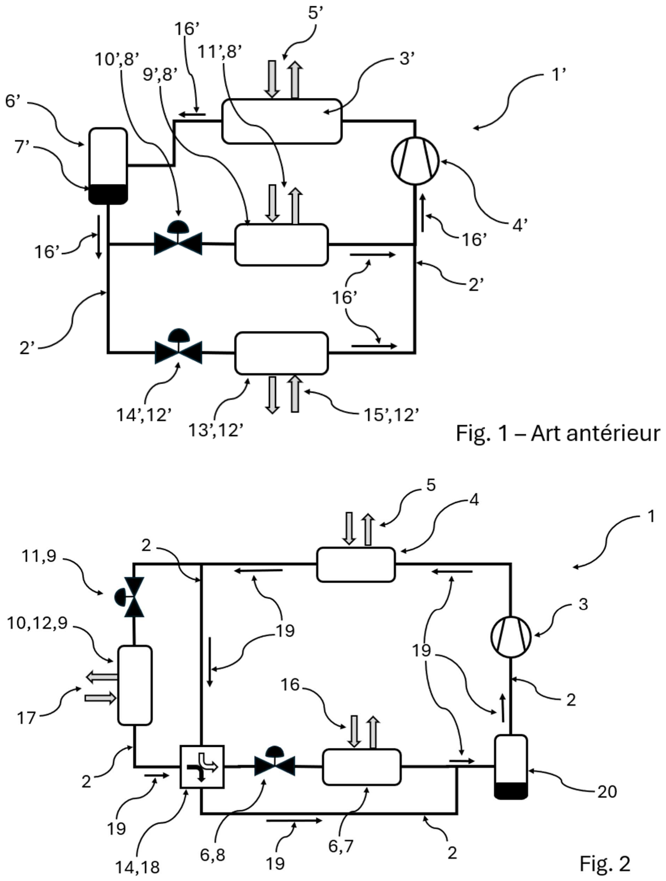

Un tel système 1' de pompe à chaleur de l'art antérieur est illustré schématiquement en Figure 1. Le système 1' de pompe à chaleur comprend un circuit 2' de fluide diphasique. Le circuit 2' comprend un condenseur 3' du fluide diphasique, monté en aval d'un compresseur 4' du fluide diphasique, le condenseur 3' coopérant par échange de chaleur avec un premier circuit 5' d'un fluide caloporteur d'échange de chaleur avec un ou plusieurs puits de chaleur. Le circuit 2' de fluide diphasique comprend un accumulateur 6' haute pression, monté en aval du condenseur 3' et contenant une réserve de fluide 7' diphasique et adapté pour assurer une séparation des phases liquide et vapeur du fluide 7' diphasique. Le circuit 2' de fluide diphasique comprend un premier ensemble 8' comprenant un premier évaporateur 9' disposé en aval d'un premier détendeur 10', le premier évaporateur 9' coopérant avec un deuxième circuit 11' secondaire de fluide caloporteur d'échange de chaleur avec une première source de chaleur. Le circuit 2' de fluide diphasique comprend un deuxième ensemble 12' comprenant un deuxième évaporateur 13' disposé en aval d'un deuxième détendeur 14', le deuxième évaporateur 9' coopérant avec un troisième circuit 15' secondaire de fluide caloporteur d'échange de chaleur avec une deuxième source de chaleur, le premier ensemble 8' et le deuxième ensemble 12' étant monté en parallèle dans le circuit 2' de fluide diphasique. La première source de chaleur échangeant avec le premier évaporateur 9' peut être une batterie de traction du véhicule électrique ou un élément de la chaine de traction de ce véhicule, nécessitant un fluide caloporteur à une température par exemple comprise entre 15°C et 20°C. La deuxième source de chaleur échangeant avec le deuxième évaporateur 13' peut être un air d'habitacle du véhicule électrique, nécessitant un fluide caloporteur à une température par exemple de l'ordre de 0°C. Dans le système 1' de pompe à chaleur de l'art antérieur illustré schématiquement en Figure 1, le sens de circulation du fluide diphasique est indiqué par les flèches 16' unidirectionnelles. Le système 1' de pompe à chaleur de l'art antérieur illustré schématiquement en Figure 1 ne permet pas un chauffage de la batterie de traction du véhicule, de sorte que le chauffage de la batterie de traction nécessite de prévoir un organe électrique complémentaire de chauffage de la batterie par effet Joule.

L'invention vise à pallier cet inconvénient.

On connaît de US2015/295285, un dispositif à cycle de réfrigération par un réfrigérant HFC (R134a), le dispositif 10 comprenant (les signes de référence correspondent aux références numériques de la Figure 1 de US2015/295285) un compresseur 11, un condenseur 13 intérieur d'échange de chaleur avec l'air de la cabine, une vanne de détente 16 présentant une fonction d'ouverture totale n'exerçant aucune action de décompression, un échangeur de chaleur 17 fonctionnant comme un évaporateur, une vanne de détente 19 de refroidissement, un évaporateur 20 intérieur, un accumulateur 23 basse pression, un échangeur 15 auxiliaire de régulation de la température de l'air de la batterie 50, une vanne 21 de détente pour décompresser le réfrigérant entrant dans l'échangeur de chaleur auxiliaire 15 lorsque la batterie secondaire 53 est refroidie par l'air de refroidissement de la batterie. Les différentes options de commutation série/parallèle de circulation du réfrigérant HFC dans les composants du dispositif 10 de US2015/295285 sont assurées par un contrôle d'une première vanne à trois voies 14a, d'une deuxième vanne à trois voies 14b, de deux électrovannes 18a et 21a et d'un clapet 18 anti-retour. Le dispositif à cycle de réfrigération par un réfrigérant HFC (R134a) de US2015/295285 ne satisfait pas les dispositions règlementaires en vigueur en Europe. En outre, la gestion des différentes options de commutation par ces vannes et clapet est complexe. Enfin, le dispositif de US2015/295285 ne permet pas de procéder à un refroidissement de la batterie du véhicule électrique par un évaporateur en série. Il ne permet pas non plus un chauffage de la batterie et de la cabine par des échangeurs en série permettant de réguler la répartition des puissances destinées à la batterie et à la cabine.

L'invention vise à pallier ces inconvénients.

L'invention vise donc à proposer un système de pompe à chaleur pour véhicule automobile électrique satisfaisant les dispositions règlementaires visant l'interdiction des substances per- et polyfluoroalkyles (PFAS).

L'invention vise aussi à proposer un tel système de pompe à chaleur utilisant un hydrocarbure inflammable à titre de fluide diphasique et qui soit compact de façon à ne pas faire circuler le fluide diphasique dans la cabine du véhicule.

L'invention vise aussi à proposer un tel système de pompe à chaleur présentant un échangeur commutable d'un mode parallèle en un mode série par des moyens de commutation eux-mêmes compacts.

### [Exposé de l'invention]

L'invention vise donc un système de pompe à chaleur pour véhicule automobile, le système de pompe à chaleur formant un circuit primaire clos d'au moins un fluide diphasique, le circuit primaire comprenant :
- un compresseur,
- un premier condenseur disposé en aval du compresseur et coopérant avec un premier circuit secondaire d'un fluide caloporteur de transfert de chaleur à un premier puits de chaleur du véhicule,
- un premier ensemble comprenant un échangeur, dit échangeur réversible, disposé en aval d'un premier détendeur du premier ensemble, ledit échangeur réversible étant adapté pour pouvoir être configuré pour former un premier évaporateur et alternativement un deuxième condenseur, ledit échangeur réversible coopérant avec un deuxième circuit secondaire de fluide caloporteur, d'échange de chaleur entre le fluide caloporteur du deuxième circuit secondaire et au moins un organe du véhicule susceptible de former une première source de chaleur ou alternativement, un deuxième puits de chaleur,
- un deuxième ensemble comprenant un deuxième évaporateur disposé en aval d'un deuxième détendeur, le deuxième évaporateur coopérant avec un troisième circuit secondaire d'un fluide caloporteur d'échange de chaleur avec au moins une deuxième source de chaleur,
- une vanne unique commutable entre :
   (i) une première configuration de la vanne dans laquelle la vanne permet une circulation de fluide diphasique dans le circuit primaire en parallèle dans le premier ensemble et dans le deuxième ensemble, et
   (ii) une deuxième configuration de la vanne dans laquelle la vanne permet une circulation de fluide diphasique dans le circuit primaire en série dans le premier ensemble et dans le deuxième ensemble,
les termes aval et amont étant définis par rapport au sens de circulation du fluide diphasique dans le circuit primaire.

Dans tout le texte, les termes « amont » et « aval » sont à considérer par rapport au sens de circulation du fluide diphasique de l'amont vers l'aval dans une même boucle du circuit primaire.

Selon l'invention, la vanne dans la première configuration permet une circulation de fluide diphasique dans le circuit primaire, en parallèle dans le premier ensemble et dans le deuxième ensemble. Dans la première configuration de la vanne une partie du flux de fluide diphasique comprimé dans le compresseur puis condensé dans le premier condenseur circule dans le premier détendeur du premier ensemble puis dans ledit échangeur réversible du premier ensemble, puis dans la vanne pour être dirigé vers le compresseur. Dans la première configuration de la vanne une autre partie complémentaire du flux de fluide diphasique comprimé dans le compresseur puis condensé dans le premier condenseur circule dans le premier détendeur du deuxième ensemble puis dans ledit échangeur réversible du deuxième ensemble, puis dans la vanne, pour être dirigé vers le compresseur.

Selon certains modes de réalisation, rien n'empêche de prévoir d'interrompre le flux de fluide diphasique dans l'un des premier et deuxième ensemble, la vanne étant dans la première configuration.

Selon l'invention, la vanne dans la deuxième configuration permet une circulation de fluide diphasique dans le circuit primaire en série successivement dans le premier détendeur du premier ensemble, puis dans ledit échangeur réversible du premier ensemble, puis dans la vanne, puis dans le deuxième détendeur du deuxième ensemble puis dans le deuxième évaporateur du deuxième ensemble. Dans la deuxième configuration de la vanne le flux de fluide diphasique comprimé dans le compresseur puis condensé dans le premier condenseur circule dans le premier détendeur du premier ensemble puis dans ledit échangeur réversible du premier ensemble, puis dans la vanne, puis dans le deuxième détendeur du deuxième ensemble, puis dans le deuxième évaporateur du deuxième ensemble, pour être dirigé vers le compresseur.

Le système selon l'invention comprend une vanne unique de commutation permettant de disposer d'une source de chaleur (premier condenseur), d'une source de froid (deuxième évaporateur) et dudit échangeur réversible entre une source de chaleur et une source de froid, selon les modes d'utilisation. Avantageusement, le premier condenseur, le deuxième évaporateur et ledit échangeur réversible sont adaptés chacun pour pouvoir permettre un contrôle de leur puissance et de la température du fluide caloporteur du circuit secondaire (premier, deuxième et troisième) correspondant.

Selon l'invention, le compresseur est adapté pour comprimer du fluide diphasique gazeux circulant dans le circuit primaire en prélevant du fluide diphasique gazeux dans un accumulateur basse pression s'étendant en amont du compresseur et pour délivrer du fluide diphasique comprimé en aval du compresseur. Selon l'invention, l'accumulateur basse pression constitue une réserve de fluide diphasique et assure une séparation des phases liquide et gazeuse du fluide diphasique.

Selon l'invention, le premier condenseur est adapté pour recevoir le fluide diphasique comprimé dans le compresseur, et pour permettre une condensation du fluide diphasique gazeux comprimé productrice de chaleur. Selon certains modes de réalisation, le premier condenseur est un condenseur à eau. Selon certains modes de réalisation, le premier puits de chaleur du véhicule est un habitacle du véhicule, dont l'air ambiant est destiné à être chauffé en hiver. Selon certains modes de réalisation, le premier puits de chaleur du véhicule est un radiateur extérieur en été.

Selon l'invention, le premier détendeur de fluide diphasique est adapté pour recevoir le fluide diphasique condensé par le premier condenseur et contrôler le débit de fluide diphasique en sortie du premier détendeur et entrant dans ledit échangeur réversible.

Selon l'invention, ledit échangeur réversible est adapté pour pouvoir fonctionner en mode évaporateur (ou « chiller » en anglais) ou en mode condenseur, notamment en mode condenseur à eau.

Selon certains modes de réalisation, le système distant formant alternativement un deuxième puits de chaleur ou une première source de chaleur est une batterie de traction du véhicule électrique.

Selon l'invention, ledit échangeur réversible peut être configuré pour former le deuxième condenseur coopérant avec le deuxième circuit secondaire de fluide caloporteur, le deuxième circuit secondaire de fluide caloporteur étant, dans cette configuration, un circuit d'échange de chaleur entre le fluide caloporteur du deuxième circuit secondaire et au moins un organe du véhicule constituant le deuxième puits de chaleur.

Selon l'invention, ledit échangeur réversible peut être configuré pour former le premier évaporateur coopérant avec le deuxième circuit secondaire de fluide caloporteur, le deuxième circuit secondaire de fluide caloporteur étant, dans cette configuration, un circuit d'échange de chaleur entre le fluide caloporteur du deuxième circuit secondaire et au moins un organe du véhicule constituant la première source de chaleur.

Selon l'invention, le système de pompe à chaleur selon l'invention comprend des moyens de contrôle du régime du compresseur, des moyens de contrôle d'une ouverture de détente du premier détendeur et des moyens de contrôle d'une ouverture de détente du deuxième détendeur.

Selon certains modes de réalisation, le véhicule automobile est un véhicule automobile électrique ou hybride muni d'une batterie de traction, d'alimentation d'un moteur électrique.

Selon certains modes de réalisation, ledit échangeur réversible est adapté pour pouvoir opérer en mode évaporateur (ou « chiller », en anglais) ou en mode condenseur, notamment en mode condenseur à eau.

Selon certains modes de réalisation, le deuxième circuit secondaire de fluide caloporteur est un circuit d'échange de chaleur entre le fluide caloporteur du deuxième circuit secondaire et une batterie de traction, d'alimentation du moteur électrique du véhicule constituant alternativement un deuxième puits de chaleur ou une première source de chaleur. Selon ces modes de réalisation, le système de pompe à chaleur selon l'invention n'exige pas l'utilisation d'un dispositif propre et spécifique de chauffage de la batterie de traction par effet Joule.

Selon certains modes de réalisation, au moins une deuxième source de chaleur est un habitacle du véhicule en été.

Selon certains autres modes de réalisation, le deuxième évaporateur du deuxième ensemble forme un évaporateur de HVAC (« *Heat-Ventilation-Air-Conditioning* »*,* en anglais) dédié au refroidissement de l'habitacle.

Selon certains modes de réalisation, au moins une deuxième source de chaleur est une chaine de traction du véhicule. Selon certains modes de réalisation, au moins une deuxième source de chaleur est un radiateur extérieur en hiver.

Selon certains modes de réalisation, le premier ensemble et le deuxième ensemble comprennent chacun des moyens d'interruption d'un débit de fluide diphasique dans l'un dudit échangeur réversible et du deuxième évaporateur, la vanne étant dans ladite première configuration, de façon à permettre un débit de fluide diphasique dans seulement l'autre dudit échangeur réversible et du deuxième évaporateur.

Selon certains modes de réalisation, la vanne comprend :
- un corps creux étanche au fluide diphasique et formant une première chambre en communication de fluide diphasique -notamment en communication de fluide diphasique à haute pression- avec le premier condenseur, la première chambre débouchant dans une deuxième chambre par une première ouverture obturable, la deuxième chambre étant en communication de fluide diphasique -notamment en communication de fluide diphasique à haute pression ou en communication de fluide diphasique à moyenne pression- avec le deuxième détendeur et débouchant dans une troisième chambre par une deuxième ouverture obturable, la troisième chambre étant en communication de fluide diphasique -notamment en communication de fluide diphasique à moyenne ou basse pression- avec ledit échangeur réversible et débouchant dans une quatrième chambre par une troisième ouverture obturable,

la quatrième chambre étant en communication de fluide diphasique -notamment en communication de fluide diphasique à basse pression- avec le compresseur,
   - un pointeau mobile dans le corps creux et présentant trois organes d'obturation adaptés et disposés pour pouvoir chacun obturer l'une des première, deuxième et troisième ouvertures, dont
un premier organe d'obturation de la première ouverture obturable et un troisième organe d'obturation de la troisième ouverture obturable adaptés et disposés pour obturer la première ouverture obturable et la troisième ouverture obturable dans la deuxième configuration de la vanne, la deuxième ouverture n'étant pas obturée, et
un deuxième organe d'obturation de la deuxième ouverture obturable dans la première configuration de la vanne, la première ouverture et la troisième ouverture n'étant pas obturées,
le pointeau mobile étant adapté pour pouvoir être déplacé entre la première configuration et la deuxième configuration de la vanne.

Selon certains modes de réalisation, le pointeau mobile est monté mobile en translation dans le corps creux. Selon certains modes de réalisation, le pointeau mobile est monté mobile en translation dans le corps creux selon un axe longitudinal du corps creux.

Selon certains autres modes de réalisation, rien n'empêche de prévoir que la vanne soit une vanne à bille de commutation adaptée pour être entrainée en rotation par un actionneur à courant continu de façon à placer la vanne à bille de commutation dans la première configuration ou alternativement dans la deuxième configuration. Selon ce mode de réalisation, la vanne à bille de commutation peut être du type présentant une bille de commutation formant :
- un premier passage et un deuxième passage traversants, sensiblement symétriques l'un de l'autre par rapport au centre de la bille de commutation, l'un des premier et deuxième passage traversants étant disposés pour mettre la vanne dans la première configuration permettant une circulation de fluide diphasique dans le circuit primaire en parallèle dans le premier ensemble et dans le deuxième ensemble, et
- un troisième passage traversant diamétralement la bille de commutation et adapté pour mettre la vanne dans la deuxième configuration permettant la circulation de fluide diphasique dans le circuit primaire en série dans le premier ensemble et dans le deuxième ensemble.

Selon certains modes de réalisation, la vanne comprend au moins un organe de rappel élastique du pointeau mobile dans une position relative par rapport au corps creux, dans laquelle la vanne est dans la première configuration. Dans ces modes de réalisation, le système selon l'invention étant à l'arrêt, en l'absence d'un gradient de pression de fluide diphasique dans le circuit primaire, la vanne est maintenue élastiquement dans la première configuration par au moins un organe de rappel.

Rien n'empêche cependant de prévoir, selon d'autres modes de réalisation, que la vanne comprenne au moins un organe de rappel élastique du pointeau mobile dans une position relative par rapport au corps creux, dans laquelle la vanne est dans la deuxième configuration.

Selon certains modes de réalisation, la vanne comprend au moins un actionneur adapté pour pouvoir amener le pointeau mobile dans l'une de la première configuration et de la deuxième configuration de la vanne.

Selon certains modes de réalisation, la vanne comprend au moins un actionneur adapté pour pouvoir amener le pointeau mobile dans une position par laquelle la vanne est dans la première configuration et dans laquelle la vanne permet une circulation de fluide diphasique dans le circuit primaire en parallèle dans le premier ensemble et dans le deuxième ensemble. Dans ces modes de réalisation, l'organe de rappel élastique du pointeau mobile est adapté pour rappeler élastiquement le pointeau mobile dans une position par laquelle la vanne est dans la deuxième configuration, l'actionneur n'étant pas alimenté. Rien n'empêche cependant de prévoir que la vanne comprenne au moins un actionneur adapté pour pouvoir amener le pointeau mobile dans une position par laquelle la vanne est dans la deuxième configuration et dans laquelle la vanne permet une circulation de fluide diphasique dans le circuit primaire en série dans le premier ensemble puis dans le deuxième ensemble. Dans ces modes de réalisation, l'organe de rappel élastique du pointeau mobile est adapté pour rappeler élastiquement le pointeau mobile dans une position par laquelle la vanne est dans la première configuration, l'actionneur n'étant pas alimenté.

Selon certains modes de réalisation avantageux, l'actionneur comprend un actionneur électromagnétique. L'actionneur peut être un solénoïde d'entrainement du pointeau mobile dans l'une ou l'autre de la première configuration et de la deuxième configuration de la vanne. Selon certains modes de réalisation avantageux, l'actionneur est un actionneur unique. L'actionneur de la vanne est un actionneur simple permettant de disposer d'une source de chauffage fixe, d'une source de refroidissement fixe et d'une source réversible de chauffage ou refroidissement selon les cas d'usage. Le système selon l'invention est simplifié, notamment du fait de la vanne, et son coût est réduit.

Selon certains modes de réalisation, le corps creux forme une dérivation de mise en communication de la première chambre et de la quatrième chambre et adaptée pour pouvoir permettre une égalisation des pressions de fluide diphasique entre la première chambre et la quatrième chambre dans ladite deuxième configuration de la vanne. Dans ces modes de réalisation, dans ladite deuxième configuration de la vanne, la pression de fluide diphasique dans la première chambre et dans la quatrième chambre, égalisée du fait de la dérivation, maintient le pointeau et la vanne dans ladite deuxième configuration.

Selon certains modes de réalisation, dans ladite première configuration de la vanne, la pression de fluide diphasique dans la première chambre et dans la deuxième chambre, maintient le pointeau et la vanne dans ladite première configuration.

Selon certains modes de réalisation, la première configuration et la deuxième configuration de la vanne sont des configurations stables maintenues par des différences de pression dans le circuit primaire.

Selon certains modes de réalisation, la vanne est commutable entre la première configuration et la deuxième configuration en l'absence d'un différentiel de pression de fluide diphasique dans le circuit primaire Selon ces modes de réalisation, la vanne est commutable entre la première configuration et la deuxième configuration lorsque la pompe à chaleur est à l'arrêt, notamment, notamment lorsque le compresseur est à l'arrêt.

Selon certains modes de réalisation, le circuit primaire comprend un réservoir, dit réservoir basse pression, de fluide diphasique adapté pour former une réserve de fluide diphasique et pour permettre une séparation des phases liquide et gazeuse du fluide diphasique, le réservoir basse pression étant disposé en amont du compresseur et en aval de chacun du deuxième évaporateur et dudit échangeur réversible.

Selon certains modes de réalisation, le fluide diphasique comprend au moins un hydrocarbure. Selon certains modes de réalisation, le fluide diphasique est formé d'au moins un hydrocarbure. Selon certains modes de réalisation, le fluide diphasique comprend du propane.

Selon certains modes de réalisation, le fluide diphasique est formé de propane (R290). Le système selon l'invention satisfait les dispositions règlementaires relatives à l'interdiction des PFAS. Rien n'empêche cependant de prévoir que le fluide diphasique soit distinct du propane.

Selon certains modes de réalisation, le système selon l'invention est sous forme d'un module compact groupant sur un même support au moins la vanne, le circuit primaire, le premier condenseur, ledit échangeur réversible, le deuxième évaporateur, le premier détendeur et le deuxième détendeur. Selon ces modes de réalisation, le fluide diphasique circulant dans le circuit primaire du système selon l'invention est maintenu à distance de l'habitacle du véhicule et de la batterie de traction du véhicule électrique.

Selon certains modes de réalisation, le fluide caloporteur d'au moins l'un - notamment de chacun- du premier circuit secondaire, du deuxième circuit secondaire et du troisième circuit secondaire est une eau glycolée.

L'invention s'étend également à un véhicule automobile -notamment à un véhicule automobile électrique ou hybride- comprenant un système de pompe à chaleur selon l'invention.

### [Description des dessins]

D'autres caractéristiques et avantages de l'invention apparaîtront encore à la lecture de la description qui va suivre. Celle-ci est purement illustrative et doit être lue en regard des dessins annexés parmi lesquels :
[Fig. 1] la Figure 1 est une représentation schématique d'un système de pompe à chaleur de l'art antérieur décrit en partie introductive du présent document,
[Fig. 2] la Figure 2 est une représentation schématique d'un système de pompe à chaleur selon l'invention, comprenant une vanne unique commutable, la vanne commutable étant dans une première configuration de commutation,
[Fig. 3] la Figure 3 est une représentation schématique d'un système de pompe à chaleur selon l'invention dans lequel ledit échangeur réversible agit comme un condenseur, le système comprenant une vanne unique commutable représentée dans une deuxième configuration de commutation,
[Fig. 4] la Figure 4 est une représentation schématique d'un système de pompe à chaleur selon l'invention dans lequel ledit échangeur réversible agit comme un évaporateur, le système comprenant une vanne unique commutable représentée dans une deuxième configuration de commutation,
[Fig. 5] la Figure 5 est une représentation schématique d'une vanne de commutation d'un système selon l'invention,
[Fig. 6] la Figure 6 est une représentation schématique d'une première variante d'une vanne commutable d'un système selon l'invention, la vanne commutable étant dans la première configuration de commutation,
[Fig. 7] la Figure 7 est une représentation schématique de la première variante d'une vanne commutable d'un système selon l'invention, la vanne commutable étant dans la deuxième configuration de commutation, et
[Fig. 8] la Figure 8 est une représentation schématique d'une deuxième variante d'une vanne commutable d'un système selon l'invention.

### [Description des modes de réalisation]

La vue schématique d'un système 1 de pompe à chaleur d'un véhicule automobile électrique ou hybride représenté en figure 2 forme un circuit 2 primaire clos de fluide diphasique dans lequel le sens de circulation du fluide diphasique est représenté par des flèches 19 unidirectionnelles. Le système 1 selon l'invention représenté en figure 2 est dans une configuration dans laquelle le fluide diphasique circule en parallèle dans un premier ensemble 9 et dans un deuxième ensemble 6 du circuit 2 primaire. Le circuit 2 comprend un compresseur 3 disposé en aval d'un réservoir 20 basse pression constituant une réserve de fluide diphasique, assurant une séparation des phases liquide et gazeuse du fluide diphasique dans le réservoir 20 basse pression et un prélèvement de fluide diphasique gazeux par le compresseur 3. Le compresseur 3 est adapté pour comprimer le fluide diphasique gazeux prélevé dans le réservoir 20 basse pression et pour délivrer du fluide diphasique comprimé en aval du compresseur 3. Le circuit 2 comprend un premier condenseur 4 de condensation du fluide diphasique comprimé par le compresseur 3. Le premier condenseur 4 peut être de tout type. Il peut s'agir d'un condenseur 4 à eau de production d'une eau chaude. Le condenseur 4 coopère avec un premier circuit 5 secondaire d'un fluide caloporteur configuré pour échanger de la chaleur avec un premier puits de chaleur, c'est-à-dire un organe du véhicule destiné à recevoir cette chaleur. Le premier puits de chaleur peut être un habitacle du véhicule, dont l'air ambiant est destiné à être chauffé en hiver. Le premier puits de chaleur peut aussi être un radiateur extérieur du véhicule, refroidi du fait du déplacement du véhicule en été.

Le premier ensemble 9 s'étend en aval du condenseur 4 et comprend un échangeur, dit échangeur 10 réversible, disposé en aval d'un premier détendeur 11, ledit échangeur 10 réversible étant adapté pour pouvoir être configuré pour former un premier évaporateur 12 et alternativement un deuxième condenseur 13. En figure 2, ledit échangeur 10 réversible forme un premier évaporateur 12 et coopère avec un deuxième circuit 17 secondaire de fluide caloporteur. Le deuxième circuit 17 secondaire est configuré pour que le fluide caloporteur échange de la chaleur avec au moins un organe du véhicule formant une première source de chaleur.

Le deuxième ensemble 6 du circuit 2 primaire s'étend en aval du condenseur 4 et comprend un deuxième évaporateur 7 s'étendant en aval d'un deuxième détendeur 8. Le deuxième évaporateur 7 coopérant avec un troisième circuit 16 secondaire de fluide caloporteur d'échange de chaleur avec une deuxième source de chaleur du véhicule.

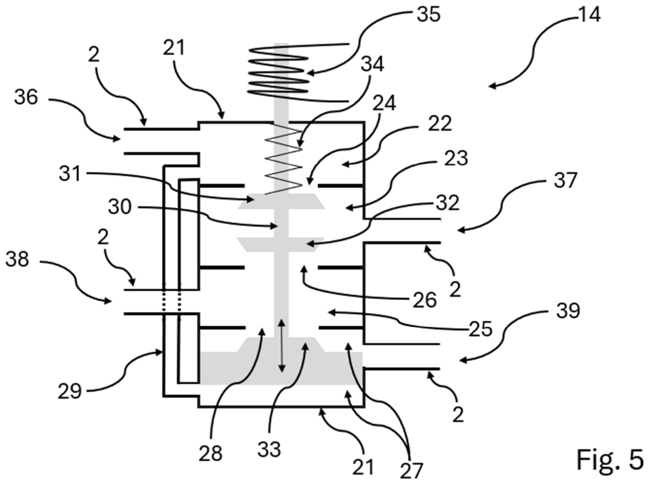

Le système 1 de pompe à chaleur selon l'invention comprend une vanne 14 unique commutable entre :
(i) une première configuration 18 à quatre voies, dans laquelle la vanne 14 permet une circulation de fluide diphasique dans le circuit 2 primaire en parallèle dans le premier ensemble 9 et dans le deuxième ensemble 6, et
(ii) une deuxième configuration 15 à deux voies, dans laquelle la vanne 14 permet une circulation de fluide diphasique dans le circuit 2 primaire en série dans le premier ensemble 9 et dans le deuxième ensemble 6. La vanne 14 est décrite en détail aux figures 5 à 8.

Dans la configuration du système 1 de pompe à chaleur selon l'invention telle que décrite en figure 2, le contrôle thermique du véhicule peut être assuré comme suit. Lorsque la puissance de refroidissement fournie par le deuxième évaporateur 7 du deuxième ensemble 6 est prioritaire sur la puissance de refroidissement fournie le premier évaporateur 12 du premier ensemble 9, le régime d'entrainement du compresseur 3 permet de réguler la puissance d'évaporation produite par le deuxième évaporateur 7. L'ouverture du deuxième détendeur 8 du deuxième ensemble 6 permet de réguler le sous-refroidissement en sortie du premier condenseur 4 et l'ouverture du premier détendeur 11 du premier ensemble 9 permet de réguler la puissance d'évaporation du premier évaporateur 12 du premier ensemble 9.

Lorsque la puissance de refroidissement fournie par le premier évaporateur 12 est prioritaire sur la puissance de refroidissement fournie le deuxième évaporateur 7, le régime d'entrainement du compresseur 3 permet de réguler la puissance d'évaporation produite par le premier évaporateur 12. L'ouverture du premier détendeur 11 permet de réguler le sous-refroidissement en sortie du premier condenseur 4 et l'ouverture du deuxième détendeur 8 permet de réguler la puissance d'évaporation du deuxième évaporateur.

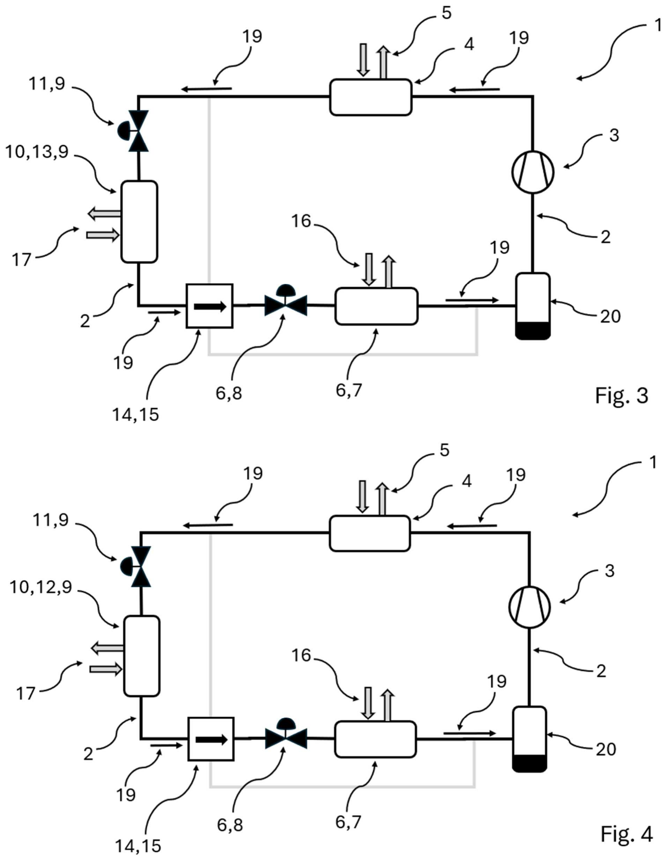

Le système 1 selon l'invention représenté en Figure 3 est dans une configuration dans laquelle le fluide diphasique circule en série successivement dans le premier ensemble 9 amont puis dans le deuxième ensemble 6 aval du circuit 2 primaire. Dans le mode de fonctionnement représenté en Figure 3, ledit échangeur 10 réversible est configuré pour former le deuxième condenseur 13. Le deuxième condenseur 13 peut être un condenseur à eau et le contrôle thermique du véhicule peut être assuré comme suit. Par exemple, lorsque la puissance de refroidissement attendue au niveau du deuxième évaporateur 7 sert à déshumidifier l'habitacle, le contrôle du régime d'entrainement du compresseur 3 permet de réguler la puissance d'évaporation produite par le deuxième évaporateur 7. L'ouverture du premier détendeur 11 permet de réguler la puissance de condensation du premier condenseur 4 et l'ouverture du deuxième détendeur 8 permet de réguler le sous-refroidissement en sortie dudit échangeur 10 réversible configuré pour former le deuxième condenseur 13. A titre d'un autre exemple, lorsque la puissance de refroidissement attendue au niveau du deuxième évaporateur 7 est destinée au prélèvement de calories d'une source de chaleur servant à produire une puissance de chauffage au niveau du premier condenseur 4 et dudit échangeur 10 réversible formant le deuxième condenseur 13, le contrôle du régime d'entrainement du compresseur 3 permet de réguler la puissance de condensation du premier condenseur 4. L'ouverture du premier détendeur 11 permet de réguler la puissance de condensation dudit échangeur 10 réversible formant le deuxième condenseur 13 et l'ouverture du deuxième détendeur 8 permet de réguler le sous-refroidissement en sortie dudit échangeur 10 réversible formant le deuxième condenseur 13.

Le système 1 selon l'invention représenté en Figure 4 est dans une configuration dans laquelle le fluide diphasique circule en série successivement dans le premier ensemble 9 amont puis dans le deuxième ensemble 6 aval du circuit 2 primaire. Dans le mode de fonctionnement représenté en Figure 4, ledit échangeur 10 réversible est configuré pour former le premier évaporateur 12 et le contrôle thermique du véhicule peut être assuré comme suit. Par exemple, lorsque la puissance de refroidissement fournie par le deuxième évaporateur 7 est utilisée pour déshumidifier l'habitacle du véhicule, le régime d'entrainement du compresseur 3 permet de réguler la puissance d'évaporation produite par le deuxième évaporateur 7. L'ouverture du deuxième détendeur 8 permet de réguler la puissance d'évaporation fournie par ledit échangeur 10 réversible formant le premier évaporateur 12 et l'ouverture du premier détendeur 11 permet de réguler le sous-refroidissement en sortie du condenseur 4. A titre d'un autre exemple, lorsque la puissance de refroidissement attendue au niveau deuxième évaporateur 7 est destinée au prélèvement de calories d'une source de chaleur servant à produire une puissance de chauffage au niveau du premier condenseur 4, le régime d'entrainement du compresseur 3 permet de réguler la puissance de condensation du premier condenseur 4. L'ouverture du deuxième détendeur 8 permet de réguler la puissance d'évaporation de l'échangeur 10 réversible formant le premier évaporateur 12 et l'ouverture du premier détendeur 11 permet de réguler le sous-refroidissement en sortie du condenseur 4.

Une vanne 14 de commutation quatre voies/deux voies est représentée schématiquement en figure 5. La vanne 14 comprend un corps 21 creux en au moins un matériau rigide et étanche au fluide diphasique. Le corps 21 creux est de forme globalement cylindrique de révolution et forme une première chambre 22 en communication de fluide diphasique haute pression avec le premier condenseur 4 par un tronçon du circuit 2 primaire débouchant dans la première chambre 22 par une entrée 36 de fluide diphasique haute pression. La première chambre 22 débouche, par une première ouverture 24 obturable, dans une deuxième chambre 23 du corps 21 creux, adjacente à la première chambre 22. La deuxième chambre 23 est en communication de fluide diphasique haute pression avec le deuxième détendeur 8 par un tronçon du circuit 2 primaire communiquant avec la deuxième chambre 23 par une sortie 37 de fluide diphasique haute pression. La deuxième chambre 23 débouche dans une troisième chambre 25 adjacente à la deuxième chambre 23, par une deuxième ouverture 26 obturable. La troisième chambre 25 est en communication de fluide diphasique à moyenne pression avec ledit échangeur 10 réversible par un tronçon du circuit 2 primaire communiquant avec la troisième chambre 25 par une entrée 38 de fluide diphasique à moyenne ou basse pression. La troisième chambre 25 débouche dans une quatrième chambre 27 adjacente à la troisième chambre 25 par une troisième ouverture 28 obturable. La quatrième chambre 27 est adaptée pour pouvoir être en communication de fluide diphasique à basse pression avec le réservoir 20 basse pression par un tronçon du circuit 2 primaire communiquant avec la quatrième chambre 27 par une sortie 39 de fluide diphasique basse pression. Ainsi, la quatrième chambre 27 est en communication de fluide diphasique à basse pression et à l'état gazeux avec une entrée de fluide diphasique à basse pression et à l'état gazeux, dans le compresseur 3, via le réservoir 20 basse pression.

La vanne 14 comprend un pointeau 30 de commutation, monté mobile dans le volume intérieur du corps 21 creux, au moins entre une première position du pointeau 30 mobile, dans laquelle la vanne 14 est dans la première configuration 18 à quatre voies et une deuxième position du pointeau 30 mobile, dans laquelle la vanne 14 est dans la deuxième configuration 15 à deux voies. Le pointeau 30 de commutation présente trois organes 31,32,33 d'obturation adaptés et disposés pour pouvoir obturer chacun l'une des première, deuxième et troisième ouvertures 24,26,28. La vanne 14 présente un actionneur 35 du pointeau 30 de commutation adapté pour amener le pointeau 30 de commutation dans l'une des deux positions du pointeau 30 de commutation dans le corps 21 creux, correspondant à l'une des configurations 15,18 de la vanne 14, dans lesquelles le fluide diphasique circule successivement en série dans le premier ensemble 9 et dans le deuxième ensemble 6 ou respectivement en parallèle dans le premier ensemble 9 et dans le deuxième ensemble 6. La vanne 14 présente un organe 34 de rappel élastique du pointeau 30 de commutation dans l'autre des deux positions du pointeau 30 de commutation dans le corps 21 creux. Le corps 21 creux présente une dérivation 29 adaptée pour mettre la première chambre 22 et la quatrième chambre 27 en communication de fluide diphasique dans l'une seulement des première et deuxième configurations 18,15 de la vanne 14.

Selon certains modes de réalisation, le pointeau 30 de commutation peut être rappelé élastiquement dans la première configuration 18 par un organe 34 de rappel élastique, notamment par un ressort, en l'absence de tout gradient de pression dans le volume interne du corps 21 creux, le système 1 de pompe à chaleur étant à l'arrêt. Également, en l'absence de tout gradient de pression dans le volume interne du corps 21 creux, le pointeau 30 de commutation peut être déplacé par l'actionneur 35 à l'encontre du ressort 34 et de façon à amener la vanne 14 dans la deuxième configuration 15. Rien n'empêche cependant de prévoir, selon certains modes de réalisation, que le pointeau 30 de commutation peut être rappelé élastiquement dans la deuxième configuration 15 par un organe 34 de rappel élastique, notamment par un ressort, en l'absence de tout gradient de pression dans le volume interne du corps 21 creux, le système 1 de pompe à chaleur étant à l'arrêt. Également, en l'absence de tout gradient de pression dans le volume interne du corps 21 creux, le pointeau 30 de commutation peut être déplacé par l'actionneur 35 à l'encontre du ressort 34 et de façon à amener la vanne 14 dans la première configuration 18.

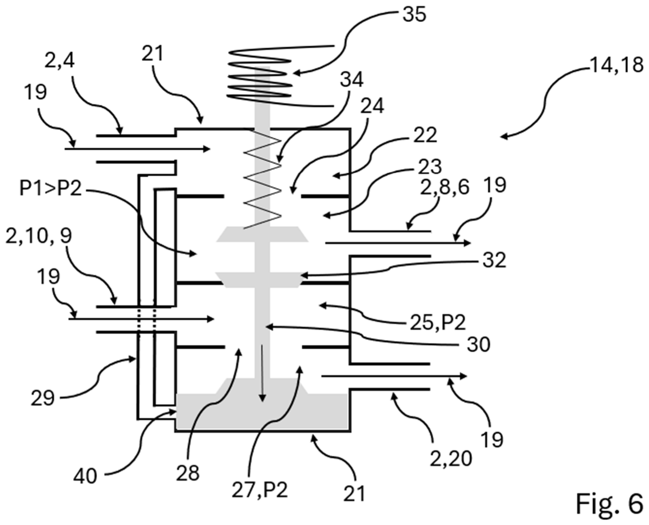

La vanne 14 est représentée en Figure 6 dans la première configuration 18 à quatre voies, dans laquelle du fluide diphasique circule dans le circuit 2 primaire en parallèle dans le premier ensemble 9 et dans le deuxième ensemble 6, le système 1 de pompe à chaleur étant en fonctionnement. Dans cette première configuration 18, la deuxième ouverture 26 obturable s'étendant entre la deuxième chambre 23 et la troisième chambre 25 est obturée par le deuxième organe 32 d'obturation, les première et troisième ouvertures 24,28 obturables n'étant pas obturées. Le fluide diphasique circulant dans les première et deuxième chambres 23,25 entre l'entrée 36 et la sortie 37 de fluide diphasique à haute pression est à une pression (P1) supérieure à la pression (P2) du fluide diphasique circulant dans les troisième et quatrième chambres 25,27 entre l'entrée 38 et la sortie 39 de fluide diphasique à basse pression, le fluide diphasique circulant dans les troisième et quatrième chambres 25,27 étant un fluide diphasique détendu par le premier détendeur 11. Dans cette première configuration 18 de la vanne 4 dans laquelle du fluide diphasique circule en parallèle dans le premier ensemble 9 et dans le deuxième ensemble 6, la dérivation 29 est obstruée par une face 40 latérale du pointeau 30 mobile de sorte que le pointeau 30 mobile est maintenu dans cette configuration 18 du seul fait de la différence de pression (P1>P2), sans nécessiter un effort exercé par l'organe 34 de rappel et ou l'actionneur 35 sur le pointeau 30 mobile.

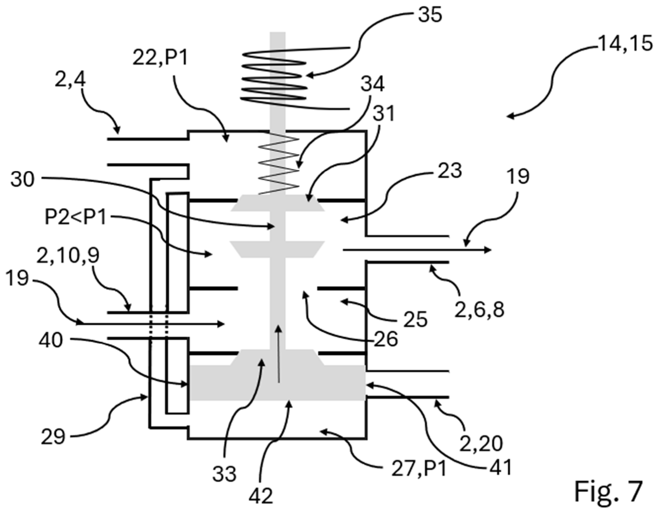

La vanne 14 est représentée en Figure 7 dans la deuxième configuration 15 à deux voies, dans laquelle du fluide diphasique circule dans le circuit 2 primaire en série dans le premier ensemble 9 puis dans le deuxième ensemble 6, le système 1 de pompe à chaleur étant en fonctionnement. Dans cette deuxième configuration 15, la première ouverture 24 obturable s'étendant entre la première chambre 22 et la deuxième chambre 23 est obturée par le premier organe 31 d'obturation et la troisième ouverture 28 obturable s'étendant entre la troisième chambre 25 et la quatrième chambre 27 est obturée par le troisième organe 33 d'obturation, la deuxième ouvertures 26 obturable s'étendant entre la deuxième chambre 23 et la troisième chambre 25 n'étant pas obturée. Dans cette deuxième configuration 15, la sortie 39 de fluide diphasique de la quatrième chambre 27 est obstruée par une face 41 latérale du pointeau 30 mobile de sorte que le fluide diphasique ne circule ni dans la première chambre 22, ni la quatrième chambre 27 ni dans la dérivation 29 -la dérivation 29 n'étant pas obstruée par la face 40 latérale du pointeau 30 mobile du fait du déplacement du pointeau mobile dans la deuxième configuration 15 par rapport à la première configuration 18 de la vanne 14-, la pression du fluide diphasique haute pression étant appliquée sur l'intégralité d'une face 42 d'extrémité longitudinale du pointeau 30 mobile. Le pointeau 30 mobile est maintenu dans cette deuxième configuration 15 du seul fait de la différence de pression (P1>P2) de fluide diphasique dans les première et quatrième chambre 22,27 (P1) d'une part et les deuxième et troisième chambres 23,25 (P2) d'autre part, sans nécessiter un effort exercé par l'organe 34 de rappel et ou l'actionneur 35 sur le pointeau 30 mobile.

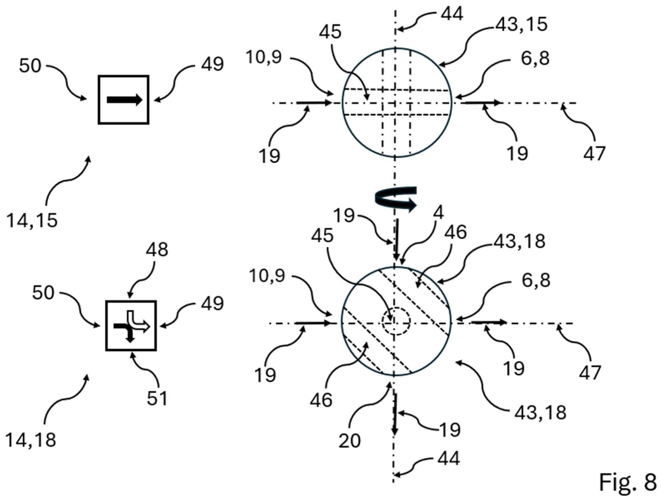

Une variante d'une vanne 14 de commutation quatre voies/deux voies d'un système 1 de pompe à chaleur selon l'invention est représentée schématiquement en figure 8. Dans cette variante représentée, la vanne 14 comprend une bille 43 de commutation ajustée pour être mobile en rotation sur elle-même dans une enveloppe (non représentée en Figure 8) présentant une face interne sphérique et formant quatre ouvertures s'étendant dans un même plan équatorial de l'enveloppe et de la bille 43 de commutation, symétriques deux à deux par rapport au centre de la face interne sphérique et selon deux axes 44,47 orthogonaux entre eux, dont :
une entrée 48 de fluide diphasique à haute pression (provenant du compresseur 4) dans la vanne 14,
une entrée 50 de fluide diphasique à moyenne pression (provenant du premier ensemble 9) ou à haute pression (provenant du compresseur 4),
une sortie 49 de fluide diphasique à moyenne pression (provenant du premier ensemble 9 et dirigé vers le deuxième ensemble 6) ou à haute pression (provenant du compresseur 4 et dirigé vers le deuxième ensemble 6), et
une sortie 51 de fluide diphasique à basse pression (provenant du premier ensemble 9 et dirigé vers le réservoir 20).

La bille 43 de commutation est mobile en rotation dans l'enveloppe selon un axe 44 de rotation et amenée par un actionneur à courant continu dans l'une de la première configuration 18 de la vanne 14 et de la deuxième configuration 15 de la vanne 14. La bille 43 de commutation présente un canal 45 diamétral traversant la bille 43 et adapté pour permettre un flux de fluide diphasique en série dans le premier ensemble 9 puis dans le deuxième ensemble 6 dans la deuxième configuration 15 de la vanne 14. La bille 43 de commutation présente aussi deux canaux 46 symétriques par rapport au centre de la bille 43 de commutation. Dans la deuxième configuration 15 de la vanne 14, chacune des extrémités débouchantes des deux canaux 46 symétriques ne s'étendent pas en regard de l'une des quatre ouvertures de l'enveloppe de sorte que le fluide diphasique ne s'écoule pas dans les canaux 46.

Dans la deuxième configuration 18 de la vanne 14, dans laquelle la bille 43 de commutation est pivotée d'un angle de valeur 90° pa r rapport à son axe 44 de rotation, les extrémités débouchantes des deux canaux 46 symétriques s'étendent chacune en regard de l'une des ouvertures de l'enveloppe et la circulation de fluide diphasique en parallèle dans le premier ensemble 9 et dans le deuxième ensemble 6 est assurée. La commutation entre d'une part le mode de circulation de fluide diphasique en parallèle dans le premier ensemble 9 et dans le deuxième ensemble 6 et d'autre part le mode de circulation de fluide diphasique en série dans le premier ensemble 9 puis dans le deuxième ensemble 6 est assurée par une vanne 14 unique. Le système 1 de pompe à chaleur selon l'invention est simplifié.

L'invention concerne également un système de pompe à chaleur et un véhicule équipé d'un tel système, caractérisés, en combinaison ou non, par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention pouvant concerner l'une seulement de ces caractéristiques structurelles ou fonctionnelles, ou une partie seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

## Revendications

1. Système (1) de pompe à chaleur pour véhicule automobile, le système (1) de pompe à chaleur formant un circuit (2) primaire clos d'au moins un fluide diphasique, le circuit (2) primaire comprenant :
- un compresseur (3),
- un premier condenseur (4) disposé en aval du compresseur (3) et coopérant avec un premier circuit (5) secondaire d'un fluide caloporteur de transfert de chaleur à un premier puits de chaleur du véhicule,
- un premier ensemble (9) comprenant un échangeur, dit échangeur (10) réversible, disposé en aval d'un premier détendeur (11) du premier ensemble (9), ledit échangeur (10) réversible étant adapté pour pouvoir être configuré pour former un premier évaporateur (12) et alternativement un deuxième condenseur (13), ledit échangeur (10) réversible coopérant avec un deuxième circuit (17) secondaire de fluide caloporteur d'échange de chaleur entre le fluide caloporteur du deuxième circuit (17) secondaire et au moins un organe du véhicule susceptible de former une première source de chaleur ou alternativement, un deuxième puits de chaleur,
- un deuxième ensemble (6) comprenant un deuxième évaporateur (7) disposé en aval d'un deuxième détendeur (8), le deuxième évaporateur (7) coopérant avec un troisième circuit (16) secondaire d'un fluide caloporteur d'échange de chaleur avec une deuxième source de chaleur,
- une vanne (14) unique commutable entre :
(i) une première configuration (18) de la vanne (14) dans laquelle la vanne (14) permet une circulation de fluide diphasique dans le circuit (2) primaire en parallèle dans le premier ensemble (9) et dans le deuxième ensemble (6), et
(ii) une deuxième configuration (15) de la vanne (14) dans laquelle la vanne (14) permet une circulation de fluide diphasique dans le circuit (2) primaire en série dans le premier ensemble (9) et dans le deuxième ensemble (6),
les termes aval et amont étant définis par rapport au sens (19) de circulation du fluide diphasique dans le circuit (2) primaire.

2. Système (1) selon la revendication 1, **caractérisé en ce que** la vanne (14) comprend :
un corps (21) creux étanche au fluide diphasique et formant une première chambre (22) en communication de fluide diphasique avec le premier condenseur (4), la première chambre (22) débouchant dans une deuxième chambre (23) par une première ouverture (24) obturable,
la deuxième chambre (23) étant en communication de fluide diphasique avec le deuxième détendeur (8) et débouchant dans une troisième chambre (25) par une deuxième ouverture (26) obturable,
la troisième chambre (25) étant en communication de fluide diphasique avec ledit échangeur (10) réversible et débouchant dans une quatrième chambre (27) par une troisième ouverture (28) obturable,
la quatrième chambre (27) étant en communication de fluide diphasique basse pression avec le compresseur (3),
- un pointeau (30) mobile dans le corps (21) creux et présentant trois organes (31,32,33) d'obturation adaptés et disposés pour pouvoir chacun obturer l'une des première, deuxième et troisième ouvertures (24,26,28), dont un premier organe (31) d'obturation de la première ouverture (24) obturable et un troisième organe (33) d'obturation de la troisième ouverture (28) obturable adaptés et disposés pour obturer la première ouverture (24) obturable et la troisième ouverture (28) obturable dans la deuxième configuration (15) de la vanne (14), la deuxième ouverture (26) n'étant pas obturée, et
un deuxième organe (32) d'obturation de la deuxième ouverture (26) obturable dans la première configuration (18) de la vanne (14), la première ouverture (24) et la troisième ouverture (28) n'étant pas obturées,
le pointeau (30) mobile étant adapté pour pouvoir être déplacé entre la première configuration (18) et la deuxième configuration (15) de la vanne (14).

3. Système (1) selon la revendication 2, **caractérisé en ce que** la vanne (14) comprend au moins un organe (34) de rappel élastique du pointeau (30) mobile dans une position relative par rapport au corps (21) creux, dans laquelle la vanne (14) est dans la première configuration (18).

4. Système (1) selon l'une des revendications 2 ou 3, **caractérisé en ce que** la vanne (14) comprend au moins un actionneur (35) adapté pour pouvoir amener le pointeau (30) mobile dans l'une de la première configuration (18) et la deuxième configuration (15) de la vanne (14).

5. Système selon l'une des revendications 2 à 4, **caractérisé en ce que** le corps (21) creux forme une dérivation (29) de mise en communication de la première chambre (22) et de la quatrième chambre (27) et adaptée pour pouvoir permettre une égalisation des pressions de fluide diphasique entre la première chambre (22) et la quatrième chambre (27) dans ladite deuxième configuration (15) de la vanne (14).

6. Système selon l'une des revendications 1 à 5, **caractérisé en ce que** la première configuration (18) et la deuxième configuration (15) de la vanne (14) sont des configurations stables maintenues par des différences de pression dans le circuit (2) primaire.

7. Système selon l'une des revendications 1 à 6, **caractérisé en ce que** la vanne (14) est commutable entre la première configuration (18) et la deuxième configuration (15) en l'absence de différentiel de pression de fluide diphasique dans le circuit (2) primaire.

8. Système selon l'une des revendications 1 à 7, **caractérisé en ce que** le circuit (2) primaire comprend un réservoir, dit réservoir (20) basse pression, de fluide diphasique adapté pour former une réserve de fluide diphasique et pour permettre une séparation des phases liquide et gazeuse du fluide diphasique, le réservoir (20) basse pression étant disposé en amont du compresseur (3) et en aval de chacun du deuxième évaporateur (7) et dudit échangeur (10) réversible.

9. Système selon l'une des revendications 1 à 8, **caractérisé en ce que** le fluide diphasique est formé de propane.

10. Système selon l'une des revendications 1 à 9, **caractérisé en ce qu'**il est sous forme d'un module compact groupant sur un même support au moins la vanne (14), le circuit (2) primaire, le premier condenseur (4), ledit échangeur (10) réversible, le deuxième évaporateur (7), le premier détendeur (11) et le deuxième détendeur (8).

11. Véhicule automobile -notamment véhicule automobile électrique ou hybride- comprenant un système (1) de pompe à chaleur selon l'une des revendications 1 à 10.
